**Europäisches Patentamt**

**European Patent Office**

**Office européen des brevets**

(19)

(11) Veröffentlichungsnummer: **0 307 808**
**A1**

(12) ## EUROPÄISCHE PATENTANMELDUNG

(21) Anmeldenummer: **88114736.7**

(22) Anmeldetag: **09.09.88**

(51) Int. Cl.⁴: **H04N 9/80**

(30) Priorität: **17.09.87 DE 3731166**

(43) Veröffentlichungstag der Anmeldung:
**22.03.89 Patentblatt 89/12**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Schmidtmann, Burchard**
**Am Lorettowäldchen 18**
**D-7730 VS-Villingen(DE)**
Erfinder: **Cerda-Davo, Silvestre**
**Ronda de Buenavista 20-P4-4C**
**E-45005 Toledo(ES)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Videorecorder mit verbesserter Farbaufzeichnung.**

(57) Bei einem VHS-Videorecorder mit Aufzeichnung des Leuchtdichtesignals (Y) mittels eines FM-Trägers mit erhöter Bandbreite (S-VHS) soll auch die Bandbreite der aufgezeichneten Farbsignale vergrößert werden. Der Farbträger (Fm) wird am oberen Ende des freien Frequenzbereiches (1) unterhalb des Frequenzbereiches (10) des FM-Trägers (YFM) aufgezeichnet und ist mit den Farbsignalen nach dem Restseitenbandverfahren moduliert.

Fig.1

EP 0 307 808 A1

## Videorecorder mit verbesserter Farbaufzeichnung

Bei einem Videorecorder wird das Leuchtdichtesignal durch Frequenzmodulation eines Trägers aufgezeichnet, der z.B. einen Frequenzbereich von 1,3 bis 5 MHz einnimmt. Der modulierte Farbträger wird bei der Aufnahme mit einem Mischträger in einen in der Frequenz heruntergesetzen, modifizierten Farbträger mit einer Frequenz von etwa 627 kHz umgewandelt und in dem freien Frequenzbereich unterhalb des Frequenzspektrums des mit dem Leuchtdichtesignal modulierten Fm-Trägers aufgezeichnet. Da dieser freie Frequenzbereich etwa 1 MHz beträgt, ergibt sich für die Farbsignale eine Bandbreite von etwa 0,5 MHz.

Es ist ein verbessertes VHS-System bekannt (Super-VHS oder S-VHS), bei dem mit Magnetbändern mit verbesserter Magnetschicht und größerem Magnetisierungstrom für den FM-Träger ein größerer Frequenzmodulationsbereich und eine größere Gesamtbandbreite des Spektrums einreicht werden. Durch dieses System wird die Bandbreite des aufgezeichneten Leuchtdichtesignals von bisher etwa 3 MHz auf 5 MHz erhöht und außerdem der Störabstand vergrößert.

Die Bandbreite der aufgezeichneten Farbsignale blieb dabei unverändert, weil für die Aufzeichnung des Farbträgers aus Gründen der Kompatibilität nach wie vor nur der freie Frequenzbereich von etwa 0 bis 1,2 MHz unterhalb des Frequenzspektrums des FM-Trägers zur Verfügung steht. Das hat den Nachteil, daß die Schärfe und der Störabstand für die Farbsignale, also für die Wiedergabe farbiger Bildteile, noch zu wünschen übrig lassen.

Der Erfindung liegt die Aufgabe zugrunde, die Bandbreite der Farbsignale und damit die Qualität der Farbwiedergabe bei einem derartigen Recorder zu verbessern, ohne daß der verfügbare Frequenzbereich unterhalb des Frequenzspektrums des FM-Trägers vergrößert werden muß.

Diese Aufgabe wird durch die im Anspruch I beschriebene Erfindung gelöst. Vorteilhafte Weiterbildungen der Erfindung sind in den Unteransprüchen beschrieben.

Durch die erfindungsgemäße Lösung wird also unter Beibehaltung des begrenzten freien Frequenzbereiches von etwa 1,0 MHz unterhalb des Frequenzspektrums des FM-Trägers eine hinsichtlich Schärfe und Störabstand bessere Farbwiedergabe erreicht. Es besteht also insofern Kompatibilität mit den bisherigen Systemen, daß die Aufzeichnung der Farbsignale in demselben begrenzten Frequenzbereich von etwa 1 MHz wie bisher erfolgt. Während bei bekannten Recordern der Farbträger etwa in der Mitte des freien Frequenzbereiches mit zwei Seitenbändern aufgezeichnet wurde und somit nur die halbe Breite des Frequenzbereiches, nämlich 0,5 MHz, für die Farbbandbreite zur Verfügung steht, wird bei der erfindungsgemäßen Lösung die gesamte Breite des freien Frequenzbereiches für die Farbbandbreite ausgenutzt. An sich ist das Restseitenbandverfahren mit der Quadraturmodulation schwer vereinbar, weil dadurch starke Einseitenbandfehler entstehen, die zu Übersprechen führen. Bei einem PAL-Farbträger treten diese Störungen aber aus folgenden Grunde nicht in Erscheinung. Die Phasenmodulationsrichtung des PAL-Farbträgers ist in jeder zweiten Zeile umgeschaltet. Diese Umschaltung bedeutet, wie sich theoretisch nachweisen läßt, die Simulierung jeweils des anderen Seitenbandes. Der PAL-Farbträger hat bei der Aufzeichnung folgende PAL-Burstphasen: $+135°$ in ungeradzahligen Zeilen des 1. und 2. Halbbildes $-135°$ in geradzahligen Zeilen des 1. und 2. Halbbildes $+135°$ in geradzahligen Zeilen des 3. und 4. Halbbildes $-135°$ in ungeradzahligen Zeilen des 3. und 4. Halbbildes

Die positive Phasenmodulationsrichtung $+135°$ und die negative Phasenmodulationsrichtung $-135°$ stellen von Zeile zu Zeile abwechselnd das untere und obere Seitenband dar, auch dann, wenn in Wirklichkeit nur ein Seitenband übertragen wird. Im PAL-Decoder findet nun eine Mittelung der Farbträger aus zwei zeitlich aufeinanderfolgenden Zeilen statt. Durch diese Mittelung ergeben sich wieder farbträgerfrequente Signale, bei denen das an sich fehlende Seitenband simuliert ist und die Einseitenbandfehler weitestgehend ausgeglichen werden. Diese vorteilhafte Wirkung des PAL-Laufzeitdecoders auf die Einseitenbandfehler bei Quadraturmodulation sind beschrieben in der DE-PS 1 187 672.

Die Frequenz des Farbträgers liegt vorzugsweise im Bereich von 1,0 MHz am oberen Ende des freien Frequenzbereiches. Vorzugsweise liegt bei der Aufnahme und/oder Wiedergabe im Weg des Farbträgers ein Filter, das bei der Frequenz des Farbträgers eine Nyquistflanke mit einem Abfall von 6 dB in der Mitte aufweist. Da im Weg des Farbträgers einmal oder auch mehrmals eine Addition der Farbträger aus zwei Zeilen und somit eine zeitliche Verzögerung stattfindet, kann es zweckmäßig sein, auch das Leuchtdichtesignal Y um ein oder zwei Zeilen zu verzögern. Dadurch wird erreicht, daß die zeitliche Übereinstimmung von Farbsignalen und Leuchtdichtesignal erhalten bleibt und keine Verschiebung dieser Signale in Vertikalrichtung des Bildes auftritt.

Die Erfindung wird im folgenden anhand der Zeichnung erläutert. Darin zeigen

Fig. 1 im Prinzip die Aufzeichnung des Farbträgers,

Fig. 2 ein Blockschaltbild für die Aufnahme
und

Fig. 3 ein Blockschaltbild für die Aufbereitung des Farbträgers bei der Aufnahme und Wiedergabe.

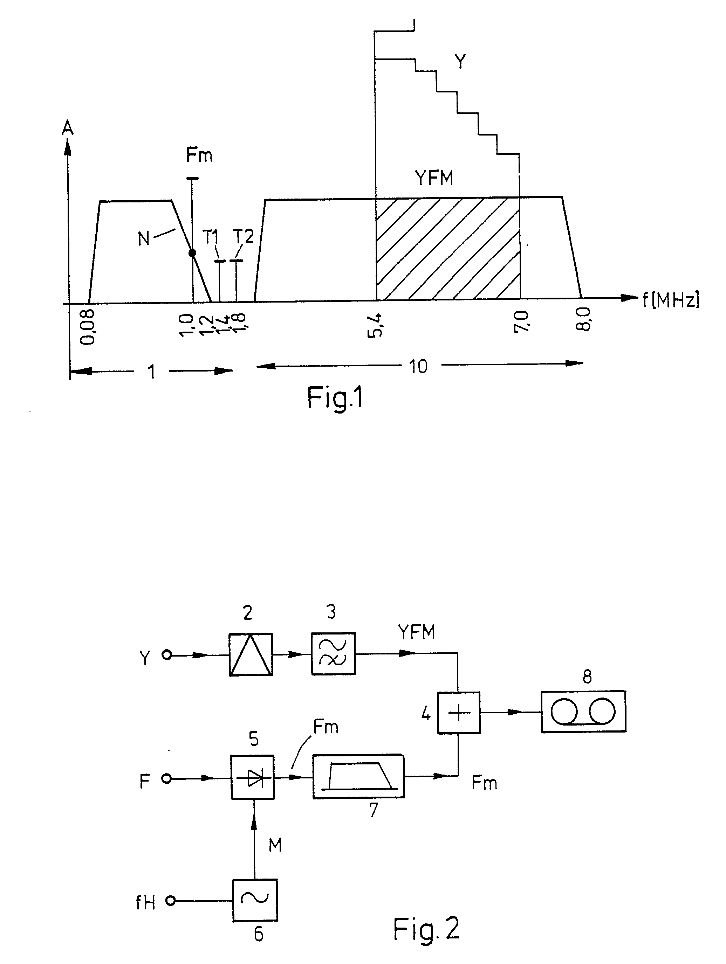

Gemäß Fig. 1 wird das Leuchtdichtesignal Y
durch Frequenzmodulation eines Fm-Trägers aufgezeichnet. Das trägerfrequente FM-Signal YFM
hat einen Modulationsbereich von 5,4 MHz für den
Signalwert Ultraschwarz, nämlich den Synchronimpuls, bis 7,0 MHz für den Signalwert Weiß. Dadurch ergibt sich für das Signal YFM ein Gesamtspektrum 10 von etwa 1,6 MHz bis etwa 8 MHz.
Unterhalb des Frequenzspektrums 10 ergibt sich
ein freier Frequenzbereich I von etwa 0 bis 1,2
MHz. Bei 1,0 MHz wird der mit zwei Farbsignalen
modulierte PAL-Farbträger Fm aufgezeichnet, wobei bei der Aufnahme und/oder Wiedergabe im
Weg des Farbträgers Fm ein Filter mit einer Nyquistflanke N mit einem Abfall von 6 dB in der
Mitte liegt. Es ist ersichtlich, daß das untere Seitenband des Farbträgers Fm sich über etwa 1,0 MHz
erstreckt und somit auch die beiden Farbdifferenzsignale eine erhöhte Bandbreite von 1,0 MHz aufweisen. Zwischen dem Farbträger Fm und dem
Signal YFM sind noch zwei Tonträger T1,T2 mit
den Frequenzen 1,4 und 1,8 MHz aufgezeichnet,
die mit zwei Tonsignalen unterschiedlicher Sprache
oder einem Stereotonsignal moduliert sind.

In Fig. 2 wird das Leuchtdichtesignale Y in
dem FM-Modulator 2 dem FM-Träger aufmoduliert,
der über den Hochpaß 3 mit einer Grenzfrequenz
von etwa 1,6 MHz auf die Addierstufe 4 gelangt.
Der PAL-Farbträger F mit einer Frequenz von 4,43
MHz wird in der Mischstufe 5 mit dem im Oszillator
6 erzeugten Mischträger M mit einer Frequenz von
3,4 MHz in den in der Frequenz herabgesetzten
modifizierten Farbträger Fm mit einer Frequenz
von 1,0 MHz umgesetzt. Der Farbträger Fm gelangt über das Filter 7 mit einer Nyquistflanke bei
1,0 MHz auf die Addierstufe 4.

Die Frequenz des Mischträgers M beträgt m/n
* fH, wobei m und n ganze Zahlen sind und fH die
Zeilenfrequenz von Y ist. Der Oszillator 6 ist daher
durch eine Spannung mit der Zeilenfrequenz fH
synchronisiert. Das Ausgangssignal der Addierstufe
4, enthaltend das Signal YFM und den modifizierten, quadraturmodulierten Farbträger Fm, wird dem
Aufzeichnungsgerät 8 zugeführt.

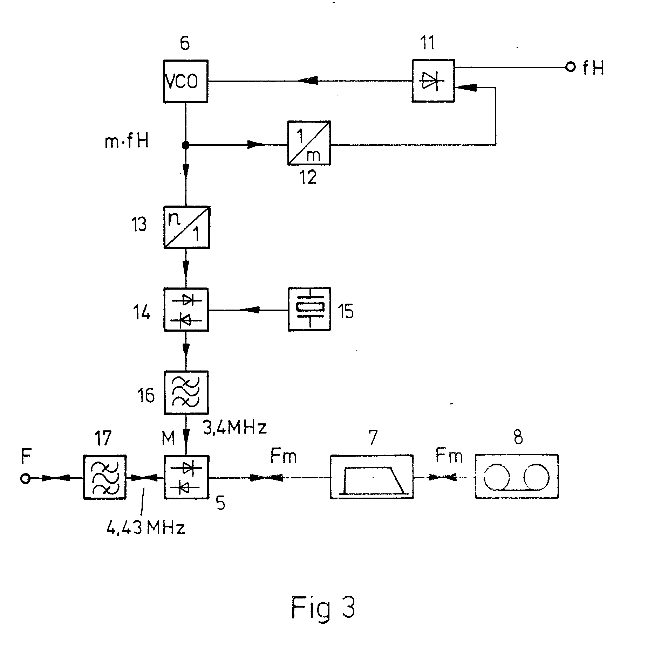

Fig. 3 zeigt eine Schaltung für die Aufbereitung
des Farbträgers für die Aufzeichnung und die Wiedergabe, wobei der zusätzliche Weg für die Signale Y und YFM gemäß Fig. 2 zur Vereinfachung
weggelassen ist. Mit einer PLL-Schaltung mit dem
VCO-Oszillator 6, der Phasenvergleichsstufe 11 und dem Frequenzteiler 12 mit dem Teilerfaktor m
wird aus der zeilenfrequenten Spannung fH ein
Träger mit der Frequenz m * fH erzeugt, der über
den Frequenzteiler 13 mit dem Teilerfaktor n auf
die Mischstufe 14 gelangt. Dieser wird andererseits
ein Träger von dem Quarzoszillator 15 zugeführt.
Die Mischstufe 14 erzeugt den Mischträger M mit
der Frequenz von 3,4 MHz, der über das Bandfilter
16 auf die Mischstufe 5 gelangt. Dieser wird andererseits der Farbträger F mit der genormten PAL-
Farbträgerfrequenz von 4,43 MHz über das Bandfilter 17 zugeführt. Die Mischstufe 5 liefert den modifizierten Farbträger Fm mit einer Frequenz von
1,03 MHz, der über das Filter 7 mit einer Nyquistflanke, das dem entsprechenden Filter 7 in Fig. 2
entspricht, auf das Aufzeichnungsgerät 8 gelangt.
Der Mischträger M ist nicht moduliert, jedoch mit
der jeweiligen Zeilenfrequenz fH verkoppelt.

Bei der Wiedergabe arbeitet die Schaltung gemäß Fig. 3 in der umgekehrten Richtung. Dann
wird der vom Aufzeichnungsgerät 8 kommende
modifizierte Farbträger Fm durch Mischung mit
dem Mischträger M in der Mischstufe 5 in den
PAL-Farbträger F mit der Frequenz von 4,43 MHz
umgesetzt. Da auch bei der Wiedergabe der
Mischträger M mit der Zeilenfrequenz fH verkoppelt ist und somit den Geschwindig keitsschwankungen des Bandes folgt, erfolgt in der Mischstufe
5 durch die Mischung von M und Fm gleichzeitig
ein Zeitfehlerausgleich innerhalb des Farbträgers.
Die Erzeugung eines zum Zeitfehlerausgleich dienenden Mischträgers M aus der Zeilenfrequenz fH
bei der Wiedergabe in einem Videorecorder ist
näher beschrieben in der DE-PS 20 08 956.

**Ansprüche**

1. Videorecorder mit verbesserter Farbaufzeichnung, bei dem das Leuchtdichtesignal (Y)
durch Modulation eines FM-Trägers (YFM) und die
Farbsignale in Form eines modulierten Farbträgers
(F) in einem freien Frequenzbereich (1) unterhalb
des Frequenzspektrums (10) des FM-Trägers
(YFM) aufgezeichnet werden, **dadurch gekennzeichnet**, daß der Farbträger (Fm) am oberen
Ende des freien Frequenzbereiches (1) liegt und
mit den Farbsignalen nach dem Restseitenbandverfahren moduliert ist.

2. Recorder nach Anspruch 1, **dadurch gekennzeichnet**, daß bei der Aufnahme und/oder
Wiedergabe im Weg des Farbträgers (Fm) ein Filter (7) liegt, das bei der Frequenz des Farbträgers
(Fm) eine Nyquistflanke (N) aufweist.

3. Recorder nach Anspruch 1, **dadurch gekennzeichnet**, daß der Farbträger (Fm) ein in der
Frequenz umgesetzter, mit zwei Farbsignalen quadraturmodulierter PAL-Farbträger ist.

4. Recorder nach Anspruch 1, **dadurch gekennzeichnet**, daß der Farbträger (Fm) eine Frequenz von etwa 1 MHz hat.

5. Recorder nach Anspruch 3, **dadurch gekennzeichnet**, daß bei der Aufnahme der PAL-Farbträger (F) mit einem Mischträger (M) mit etwa 3,4 MHz in der Frequenz umgesetzt wird.

6. Recorder nach Anspruch 1, **dadurch gekennzeichnet**, daß bei der Aufnahme und/oder Wiedergabe das Leuchtdichtesignal (Y) gegenüber den Farbsignalen um n Zeilen (n = 1,2 ...) verzögert wird.

7. Recorder nach Anspruch 1, **dadurch gekennzeichnet**, daß für die Aufzeichnung eines SECAM-Signals der SECAMFarbträger mit einem Transcoder in einen PAL-Farbträger umgesetzt wird.

Fig.1

Fig. 2

Fig 3

## EINSCHLÄGIGE DOKUMENTE

EP 88114736.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A - 1 512 299 (LOEWE OPTA) | 1 | H 04 N 9/80 |
| Y | * Fig. 1; Seite 3, Zeilen 6-26; Seite 4, Zeile 14 - Seite 5, Zeile 10 * | 2,3-6 | |
| | -- | | |
| Y | EP - A1 - 0 134 417 (ANT) | 2 | |
| | * Zusammenfassung; Fig. 2; Seite 2, Zeilen 13-36 * | | |
| | -- | | |
| Y | DE - B - 1 219 513 (FERNSEH) | 2 | |
| | * Spalte 2, Zeilen 20-31; Fig. 1-3 * | | |
| | -- | | |
| Y | US - A - 3 764 739 (FAROUDJA) | 3-6 | |
| | * Zusammenfassung; Fig. 6; Spalte 7, Zeile 67 - Spalte 8, Zeile 54; Fig. 7; Ansprüche 11-17 * | | RECHERCHIERTE SACHGEBIETE (Int. Cl.4) |
| | -- | | H 04 N 5/00 |
| A | EP - A1 - 0 155 447 (DEUTSCHE THOMSON) | 3-5 | H 04 N 7/00 H 04 N 9/00 |
| | * Fig. 2; Seite 3, Zeilen 20-30 * | | |
| | ---- | | |

Der vorliegende Recherchenbericht wurde für alle Patentansprüche erstellt.

| Recherchenort | Abschlußdatum der Recherche | Prüfer |
|---|---|---|
| WIEN | 21-11-1988 | DIMITROW |